(19) **Europäisches Patentamt**

**European Patent Office**

**Office européen des brevets**

(11) **EP 1 199 583 A2**

(12) ## EUROPEAN PATENT APPLICATION

(43) Date of publication:
24.04.2002 Bulletin 2002/17

(51) Int Cl.$^7$: **G02B 6/34**

(21) Application number: **01117343.2**

(22) Date of filing: **18.07.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **20.10.2000 JP 2000321015**

(71) Applicant: **MITSUBISHI DENKI KABUSHIKI KAISHA**
**Tokyo 100-8310 (JP)**

(72) Inventors:
• **Hashimoto, Minoru**
**Chiyoda-ku, Tokyo 100-8310 (JP)**
• **Yoshiara, Kiichi**
**Chiyoda-ku, Tokyo 100-8310 (JP)**
• **Ohira, Takuya**
**Chiyoda-ku, Tokyo 100-8310 (JP)**
• **Takagi, Shinichi**
**Chiyoda-ku, Tokyo 100-8310 (JP)**

(74) Representative: **Pfenning, Meinig & Partner GbR**
**Mozartstrasse 17**
**80336 München (DE)**

(54) **Optical fiber dispersion equalizer**

(57) A light dispersion equalizer for compensating for variation in propagation rate among employed wavelengths. On a substrate having a groove for mounting an optical fiber provided thereon, heaters are formed side by side in parallel with the optical fiber mounting groove, and the optical fiber is accommodated in the groove. Because distance between the optical fiber and the heaters can be fixed, positioning of the optical fiber with the heaters can be performed with high accuracy.

**Fig. 1A**

EP 1 199 583 A2

## Description

BACKGROUND OF THE INVENTION

1. Field of the Invention

The present invention relates to a light dispersion compensation technique for light signals transmitted at a high speed through an optical fiber in an optical fiber communication system.

2. Description of the Related Art

The propagating rate of light signals in a transmitting path varies according to wavelength. This variation exists because the refractive index of transmitting mediums differs for different wavelengths. In an optical transmitting path represented by an optical fiber, because light is confined in the transmitting medium for transmission, the transmitting rate of a signal will vary when the wavelength varies. This variation in transmitting rate according to wavelengths is know as dispersion, and a value for dispersion is given as a differential when delay time is expressed as a function of the wavelength.

The phenomenon of dispersion is inevitable in high-speed optical transmission, and causes deterioration of waveform of the signal in transmission. Therefore, for long distance transmission of the light signals, compensation for the dispersion is indispensable, and a technique for the compensation is called light dispersion compensation, or light dispersion equalization. As a light dispersion compensating device, a light dispersion compensating fiber (hereinafter referred to as DCF), or a variable light dispersion equalizer for micro-adjustment is used. The DCF is a fiber-type device having a dispersion quantity of a code reverse to the dispersion occurred in the transmission path, and matches a fiber length with the dispersion quantity generated in the transmission path for adjustment of the compensation quantity. At that point, because the dispersion quantity the DCF compensates is a fixed value, the variable type light dispersion equalizer which can finely control the dispersion compensation quantity is used for small scale variations in the dispersion quantity accompanied to changes in a usage condition.

Here, a fiber grating type variable light dispersion equalizer, which is common in the above-described variable type light dispersion equalizer, is described. In a core (optical waveguide) of the optical fiber, a diffraction grating, which is a core refractive index varied by Bragg wavelength period and is called a grating, is written. The Bragg wavelength ($\lambda$B) is a wavelength reflected at the grating, and is expressed by the following expression (1) by an interval of the grating ($\Lambda$) and equivalent refractive index (Neff) of the grating.

$$\lambda B = 2 \cdot Neff \cdot \Lambda \qquad (1)$$

The grating is a chirped grating in which an interval is linearly varied in the lengthwise direction of the optical waveguide, and the Bragg wavelength at this is linearly distributed in the lengthwise direction of the optical waveguide. This is equivalent to linear-functional distribution, in the lengthwise direction of the waveguide, of the reflecting point of light corresponded with each Bragg wavelength, and, because delay time is determined in accordance with a distance to the reflecting point, a delay quantity is expressed as a linear function of the wavelength. Utilizing this principle, the dispersion quantity can be fixed by giving a longer distance to the reflecting point in the grating for a wavelength of which delay time in the transmitting path is smaller, by giving shorter distance to the reflecting point in the grating for a wavelength of which delay time is larger, and by linearly giving the delay quantity for the wavelength in a region therebetween.

In addition, because the refractive index of the optical waveguide is also a function of the temperature, the equivalent refractive index (Neff) of the grating can also be written as a function of the temperature. Accordingly, when the temperature of the grating is changed to vary the Neff, the distance to the reflecting point in the grating can be controlled. According to this principle, when a temperature gradient to make a temperature difference $\Delta$T is given to a grating unit, the distance to the reflecting point in the grating is linearly changed for the temperature and,thus, the dispersion quantity is changed. In other words, when a temperature gradient is given to the grating in order to make the temperature difference $\Delta$T variable, the dispersion quantity becomes controllable, and variable light dispersion compensation can be realized. It should be noted that an ideal temperature gradient in the variable dispersion compensation must have a linear gradient in which temperature change ratio is constant across the total length of the grating, and that conditions for an ideal heater comprises a plurality of heaters with smaller heating areas, larger number of heaters, and minimum gaps between the heaters. The more conditions can be made to approach the ideal, the more closely will the temperature gradient approximate a straight line.

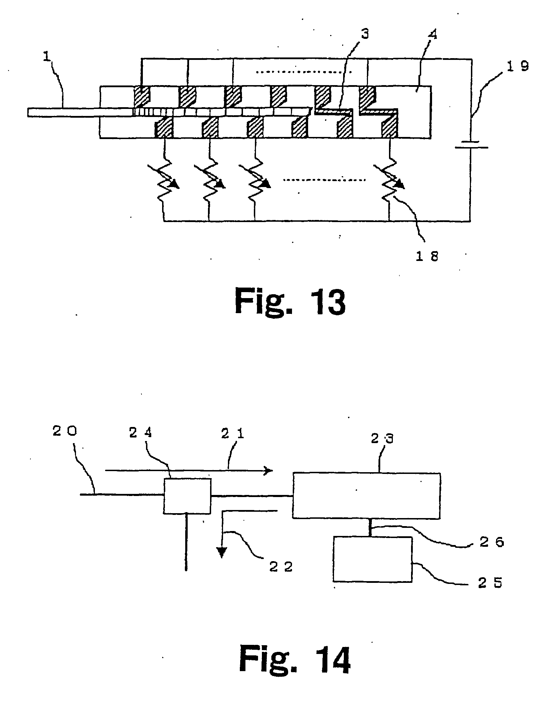

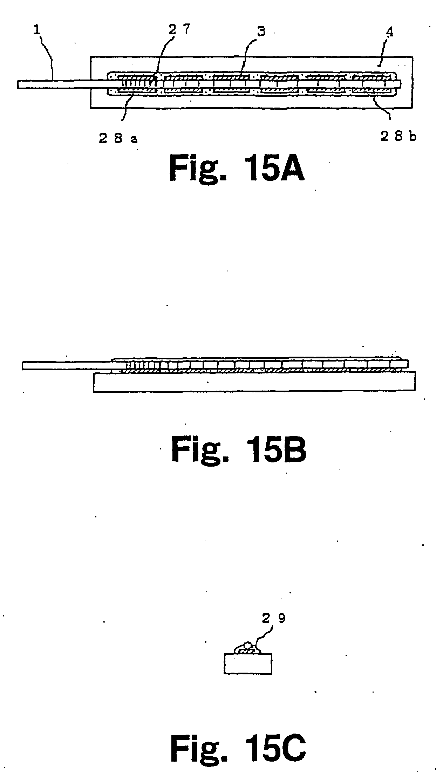

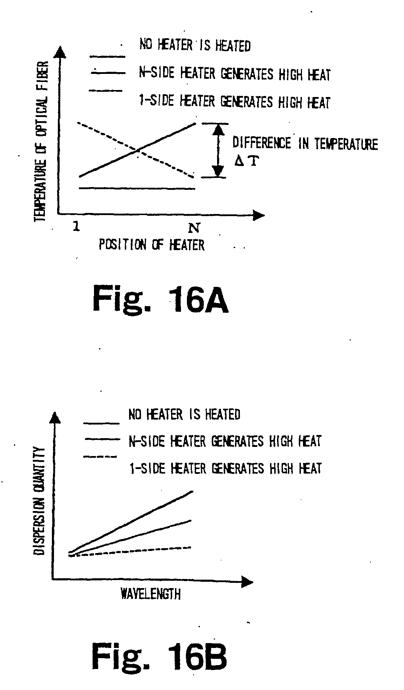

Conventional light dispersion equalizers of this type generally have a configuration as shown in Fig. 15. Fig. 16A is a chart showing the relationship between the temperature of an optical fiber and positions of heaters under heating by the heaters in the light dispersion equalizer shown in Fig. 15, and Fig. 16B is a chart showing relationship between the dispersion quantity and the wavelength in a state shown in Fig. 16A. Furthermore, Fig. 14 is a block diagram showing a connecting state of the light dispersion equalizer with peripheral devices shown in Fig. 15.

In Fig. 15, shown are an optical fiber 1, heaters 3, a substrate 4, a chirped grating 27, a heater-1 28a, a heater-N 28b, and adhesive agents 29. In the configuration shown in Fig. 14, there are an optical fiber transmitting path 20, input signal light 21, signal light after dispersion and equalization 22, a light dispersion equalizer 23, an optical circulator 24, a heater control circuit 25, and an electric cable 26.

The signal light 21 input through the optical fiber transmitting path 20 in Fig. 14 is reflected at a grating unit of the light dispersion equalizer 23, and output to a port set by the optical circulator 24 as signal light 22 in which the dispersion quantity is compensated. In addition, a heater of the light dispersion equalizer 23 is controlled by the control circuit 25, and the temperature gradient shown in Fig. 16 is given to the optical fiber. In this manner, variable control of the dispersion quantity shown in Fig. 16B can be realized.

In a further related art, a plurality of heaters are arranged in a range exceeding the length of the grating of the optical fiber, thereby heat generating quantity of heaters is adjusted for each location such that a predetermined temperature gradient is given to the optical fiber. When the dispersion quantity is made variable, the temperature gradient of the optical fiber to be a desired dispersion quantity is derived from correlated value of the dispersion quantity and the temperature gradient of the optical fiber, and heat generating quantity of the heaters is matched with the predetermined quantity.

In a configuration in which the temperature of the optical fiber is controlled by the heat generated by the heaters as such, it is important that relationship between the heat generating quantity of the heaters and the temperature of the optical fiber is constant across the entire length of the grating, and variations in the relationship may lead to deterioration in dispersion compensation accuracy. For example, in a state in which the position of the optical fiber is deviated relative to positions of heaters, even if the heat generating quantity of the heaters are excessively given, the optical fiber does not reach the required temperature. This can be improved by employing a configuration in which the shape of the heaters is enlarged to compensate for deviation in the optical fiber mounting position, however, this causes power consumption to increase and, therefore, decreases efficiency.

In the optical fiber mounting method according to a related art, the width of heaters formed on the substrate is made larger than the diameter of the optical fiber, and the optical fiber is adhered to and fixed on the heaters. Then, after the adhesive agent is hardened, the optical fiber is viewed to confirm that it does not protrude from the heaters. Accordingly, the heaters are made unnecessarily larger, causing a problem of increased power consumption. When the width of the heaters is made narrower in order to reduce power consumption, the position of the optical fiber is liable to deviate from the heaters, thus lowering yielding in an adhesive agent hardening work. Furthermore, when the optical fiber and the heaters are not uniformly adhered, variations in heat transmission from the heaters results, thereby deteriorating dispersion compensation accuracy.

SUMMARY OF THE INVENTION

An object of the present invention is to provide a light dispersion equalizer in which the positional relationship and connection state between an optical fiber and a heater are stabilized, power consumption is reduced, and dispersion control is stabilized.

The light dispersion equalizer according to a first aspect of the present invention comprises an optical fiber having a grating for causing light of a predetermined wavelength from signal light propagated through the optical fiber to be reflected, a substrate having a groove for mounting the optical fiber formed thereon, and a plurality of heaters for regulating the temperature of the optical fiber. The plurality of heaters are arranged on the substrate along the groove.

The light dispersion equalizer according to a second aspect of the present invention comprises an optical fiber having a grating for causing reflection of light of a predetermined wavelength from signal light propagated through the optical fiber, a holder having a groove for holding the optical fiber formed thereon, a plurality of heaters for regulating the temperature of the optical fiber, and a substrate having the plurality of heaters arranged thereon along the groove. The optical fiber is grasped by the holder and the substrate.

The light dispersion equalizer according to a third aspect of the present invention comprises an optical fiber having a grating for causing reflection of light of a predetermined wavelength from signal light propagated through the optical fiber, a plurality of heaters for regulating the temperature of the optical fiber, and a substrate having the plurality of heaters thereon. On the substrate is a mark indicating a mounting position of the optical fiber, and the optical fiber is positioned by the mark and mounted on the heater.

The light dispersion equalizer according to a fourth aspect of the present invention comprises an optical fiber having a grating for causing reflection of light of a predetermined wavelength from signal light propagated through the optical fiber, a heater for regulating the temperature of the optical fiber, and a substrate having the heater thereon. The heater has cross-sectional areas which vary in the axial direction of the optical fiber.

The light dispersion equalizer according to a fifth aspect of the present invention comprises an optical fiber having a grating for causing reflection of light of a predetermined wavelength from signal light propagated through the optical fiber, a heater for regulating the temperature of the optical fiber, and a substrate having the heater thereon. The heater is obliquely arranged relative to an axis of the optical fiber on the substrate.

The light dispersion equalizer according to sixth aspect of the present invention comprises an optical fiber having a grating for causing reflection of light of a predetermined wavelength from signal light propagated through the optical fiber, and heaters for regulating the temperature of the optical fiber. The heaters are arranged on an external periphery of the optical fiber.

The light dispersion equalizer according to a seventh aspect of the present invention comprises an optical fiber having a grating for causing reflection of light of a predetermined wavelength from signal light propagated through the optical fiber and heaters for regulating the temperature of the optical fiber. The heaters are arranged on a plane formed on an external cladding periphery of the optical fiber.

The light dispersion equalizer according to an eighth aspect of the present invention comprises an optical fiber having a grating for causing reflection of light of a predetermined wavelength from signal light propagated through the optical fiber, heaters for regulating the temperature of the optical fiber, and a substrate having the heater thereon. At ends of the heaters, tapered units are formed.

The light dispersion equalizer according to a ninth aspect of the present invention comprises an optical fiber having a grating for causing reflection of light of a predetermined wavelength from signal light propagated through the optical fiber, a plurality of heaters for regulating the temperature of the optical fiber, and a substrate having the heaters thereon. The heaters include heat generators and tapered patterns connected with the heat generators, and the optical fiber is arranged on the heat generators.

The light dispersion equalizer according to a tenth aspect of the present invention comprises an optical fiber having a grating for causing reflection of light of a predetermined wavelength from signal light propagated through the optical fiber, heaters for regulating the temperature of the optical fiber, and metal-contained resins filled in gaps between the optical fiber and the heaters.

The light dispersion equalizer according to an eleventh aspect of the present invention comprises an optical fiber having a grating for causing reflection of light of a predetermined wavelength from signal light propagated through the optical fiber, a plurality of heaters for regulating the temperature of the optical fiber, and variable resistors connected in series with the plurality of heaters, respectively.

BRIEF DESCRIPTION OF THE DRAWINGS

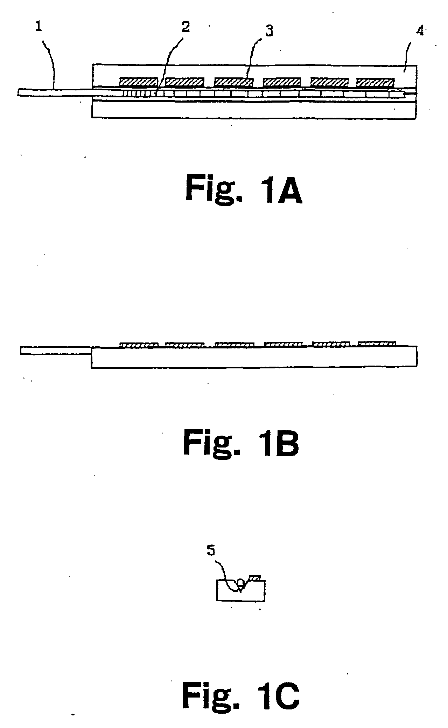

Figs. 1A, 1B, and 1C illustrates a first embodiment of a light dispersion equalizer according to the present invention, wherein Fig. 1A is a plan view, Fig. 1B is a side view, and Fig. 1C is a sectional view thereof;

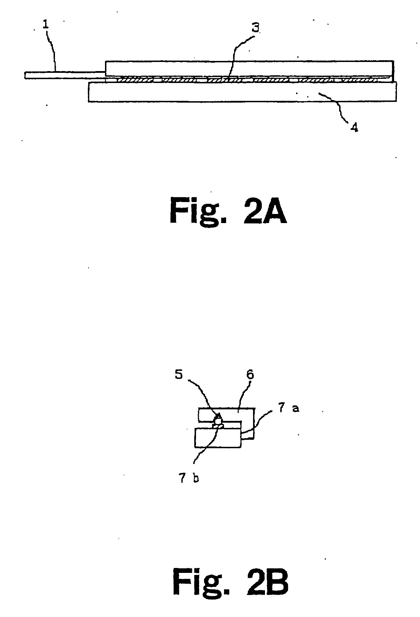

Figs . 2 illustrates a second embodiment of the light dispersion equalizer according to the present invention, and Fig. 2A is a plan view and Fig. 2B is a sectional view thereof;

Fig. 3 is a plan view showing a third embodiment of the light dispersion equalizer according to the present invention;

Fig. 4 is a plan view showing a fourth embodiment of the light dispersion equalizer according to the present invention;

Figs. 5A and 5B illustrate a fifth embodiment of the light dispersion equalizer according to the present invention, wherein Fig. 5A is a plan view thereof, and Fig. 5B is a chart showing a relationship between the temperature of an optical fiber and the position of the heaters;

Fig. 6 is a plan view showing a sixth embodiment of the light dispersion equalizer according to the present invention;

Figs. 7A and 7B illustrate a seventh embodiment of the light dispersion equalizer according to the present invention, wherein Fig. 7A is a plan view thereof, and Fig. 7B is a chart showing a relationship between the temperature of the optical fiber and the positions of the heaters;

Figs. 8A and 8B illustrate an eighth embodiment of the light dispersion equalizer according to the present invention, wherein Fig. 8A is a plan view and Fig. 8B is a sectional view thereof;

Figs. 9A and 9B illustrate a ninth embodiment of the light dispersion equalizer according to the present invention, wherein Fig. 9A is a plan view and Fig. 9B is a sectional view thereof;

Fig. 10 is a plan view showing a tenth embodiment of the light dispersion equalizer according to the present invention;

Fig. 11 is a plan view showing an eleventh embodiment of the light dispersion equalizer according to the present invention;

Figs. 12A and 12B illustrate a twelfth embodiment of the light dispersion equalizer according to the present invention, wherein Fig. 12A is a plan view and Fig. 12B is a sectional view thereof;

Fig. 13 is a diagram showing a thirteenth embodiment of the light dispersion equalizer according to the present invention;

Fig. 14 is a diagram showing connection between the light dispersion equalizer according to the present invention and peripheral devices thereof.

Figs. 15A, 15B, and 15C illustrate configuration of a conventional light dispersion equalizer, wherein Fig. 15A is a plan view, Fig. 15B is a side view, and Fig. 15C is a sectional view thereof; and

Figs. 16A and 16B provide additional information on the conventional light dispersion equalizer shown in Figs. 15A-C, with Fig. 16A being a chart showing a relationship between the temperature of an optical fiber and positions of heaters under heating by the heaters, and Fig. 16B being a chart showing a relationship between the dispersion quantity and the wavelength.

## DESCRIPTION OF THE PREFERRED EMBODIMENTS

Figs. 1A-C illustrate a first embodiment of the present invention. Shown in Figs . 1A-C are an optical fiber 1 with a grating, a grating 2, heaters 3, a substrate 4, and an optical fiber accommodating groove 5.

After the optical fiber accommodating groove 5 is machined on the substrate 4, the heaters 3 are formed arranged in a row in a range longer than the grating at positions in parallel with the optical fiber accommodating groove 5, and the optical fiber 1 is mounted in the optical fiber accommodating groove 5 at a position where a grating unit is within a range of the heaters 3. With this configuration, positional relationship between the optical fiber 1 and the heaters 3 can be fixed, and by mounting the heaters 3 at positions in the vicinity of the optical fiber 1, distance between the optical fiber 1 and the heaters 3 can be made shorter. In addition, the heaters 3 can be arranged opposing each other across the optical fiber accommodating groove 5, and, when this is done, the internal temperature of the optical fiber 1 can be stabilized because heat is transferred to the optical fiber 1 from two diametric locations. At this point, when the heaters 3 are formed on a surface of the optical fiber accommodating groove 5 where the optical fiber 1 contacts, the distance between the optical fiber 1 and the heaters 3 can be shortened, thus improving efficiency of the temperature control.

It should be noted that, for control of dispersion characteristic, the heaters 3 are controlled by a control circuit 25, and heat generating quantity of respective heaters is differentiated so that the temperature of the optical fiber 1 can have a temperature gradient as shown in Fig. 16A, thus achieving a variable control of the dispersion quantity as shown in Fig. 16B.

In the configuration of the example of the first embodiment, because the positional relationship between optical fiber and the heaters is fixed, variations in the positional relationship between the optical fiber and the heaters, which is one of the problems with the conventional art, can be reduced. As a result, positional adjustment when mounting the optical fiber and the heater parts can be simplified, and the heat transferring condition between the heaters and the optical fiber is stabilized, leading to improvement in dispersion compensation accuracy and in efficiency of assembly. In addition, by arranging the heaters in the vicinity of the optical fiber, power consumption can also be reduced.

Figs. 2A and 2B illustrate a configuration for an example according to a second embodiment of the present invention, showing an optical fiber 1 with a grating, heaters 3, a substrate 4, an optical fiber accommodating groove 5, a grooved cover 6, a first contact 7a, and second contacts 7b.

On the substrate 4, the heaters 3 are arranged in a row for a range longer than the grating and in parallel with the first contact 7a, the optical fiber accommodating groove 5 is provided on the grooved cover 6 in parallel with the first contact 7a, the optical fiber 1 is mounted in the optical fiber accommodating groove 5, and the optical fiber 1 and the heaters 3 are positioned and fixed by the first contact 7a and second contacts 7b. The optical fiber 1 is mounted in an axial direction at a position such that the grating unit is within a range of the heaters 3. Because the parts on which the optical fiber 1 is mounted and parts on which the heaters are mounted are separated, the distance between the optical fiber 1 and the heaters 3 can be shortened. It should be noted that the controlling method for the dispersion characteristic is the same as for the first embodiment.

As a result, the optical fiber and the heaters can be more closely positioned such that stable high heat conductive efficiency can be obtained, and such that power consumption can be reduced and response time improved..

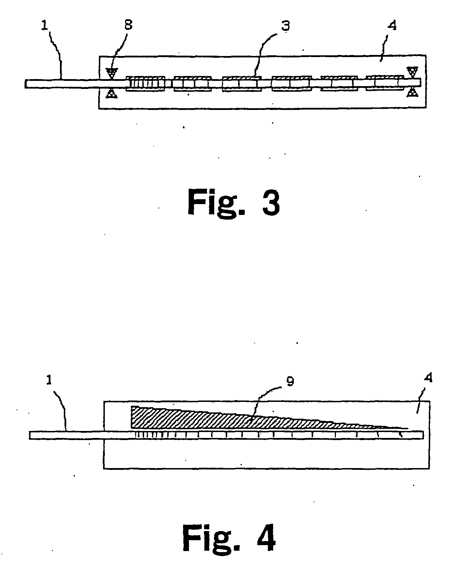

Fig. 3 illustrates a configuration according to a third embodiment of the present invention. In Fig. 3 are shown an optical fiber 1 with a grating, heaters 3, a substrate 4, and marks 8.

On the substrate 4, the marks 8 indicating mounting positions of the optical fiber 1 and the heaters 3 arranged in a row are formed for a range longer than the grating, and the optical fiber 1 is mounted at a position indicated by the marks 8, and at a position to have the grating unit within the range of the heaters 3. As a result, the positional relationship between the optical fiber 1 and the heaters 3 can be fixed. In addition, the common conventional method applied, in which the width of the heaters is made more broad than necessary and the mounting condition of the optical fiber is confirmed by comparing with the position of the heaters, can be replaced with a method in which the marks 8 are used for comparison such that the width of the heaters 3 can be reduced to the minimum necessary width. It should be noted that the method for controlling the dispersion characteristic is the same as for the first embodiment.

As a result, because the positional relationship between the optical fiber and the heaters is fixed and the mounting condition of the optical fiber can be confirmed by the marks, it is not necessary to make the width of the heaters broader than necessary which is one of the problems with the conventional art. Consequentially, the size of the heaters can be reduced to the absolute minimum, thereby reducing power consumption.

Fig. 4 illustrates an example configuration according to a fourth embodiment of the present invention, and in Fig. 4, there are an optical fiber 1 with a grating, a substrate 4, and a resistance varying heater 9.

On the substrate 4 is formed the single resistance varying heater 9 which is longer than the grating and shapes of cross-sections thereof continuously vary, and a grating unit of the optical fiber 1 is mounted at a position within the range of the heater 9 and in parallel with the heater 9. Because the heat generating condition of the heater 9 varies from location to location, the temperature transferred to the optical fiber 1 also varies at different locations . Therefore, a single heater can impart a temperature gradient in the optical fiber. In addition, by mounting the optical fiber 1 using the method of the first to third embodiments, the mounting position of the optical fiber 1 can be stabilized.

It should be noted that the dispersion characteristic is controlled according to a predetermined temperature gradient given to the optical fiber, by varying the heat generating quantity to be given to the heater 9.

In this fourth embodiment, because the temperature gradient of the optical fiber can be given by the single heater, a heater control circuit can be simplified by optimization of the shape of the heater, greatly reducing manufacturing costs.

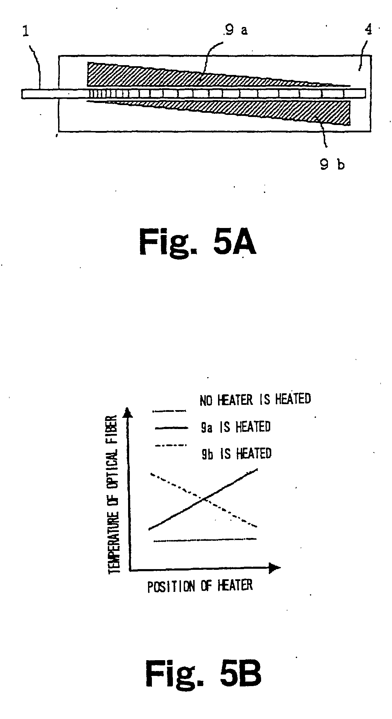

Fig. 5A illustrates an example configuration according to a fifth embodiment of the present invention. In Fig. 5A are shown an optical fiber 1 with a grating, a substrate 4, a first resistance varying heater 9a, and a second resistance varying heater 9b. In addition, Fig. 5B is a chart showing a relationship between the temperature of the optical fiber and the position of the heater when the resistance varying heaters 9a and 9b shown in Fig. 5A are generate heat.

On the substrate 4, the resistance varying heaters 9a and 9b, which, though longer, are the same shape as the grating and are positioned in parallel with the mounting position of the grating of the optical fiber 1, are formed at positions in which variational directions of cross-sectional areas of the heaters in the axial direction of the optical fiber oppose each other in a reverse direction. The mounting position of the optical fiber 1 is between the two heaters, and the grating unit of the optical fiber 1 is mounted at a position in parallel with and within ranges of the resistance varying heaters 9a and 9b. Heat generating conditions at respective locations of the resistance varying heaters 9a and 9b are mutually opposite, and therefore the optical fiber 1 can have the positive or negative temperature gradient as shown in Fig. 5B. It should be noted that, heat transferring mode to the optical fiber 1 by the resistance varying heaters 9a and 9b, the controlling method for the dispersion characteristic, the mounting method for the optical fiber 1, and the like are the same with those for the fourth embodiment.

As the result, the optical fiber can have a reversible temperature gradient by switching the two heaters, thus the variable width for the initial dispersion quantity can be compensated for in both positive or negative direction, such that the variable dispersion quantity can be doubled for the configuration shown in the fourth embodiment.

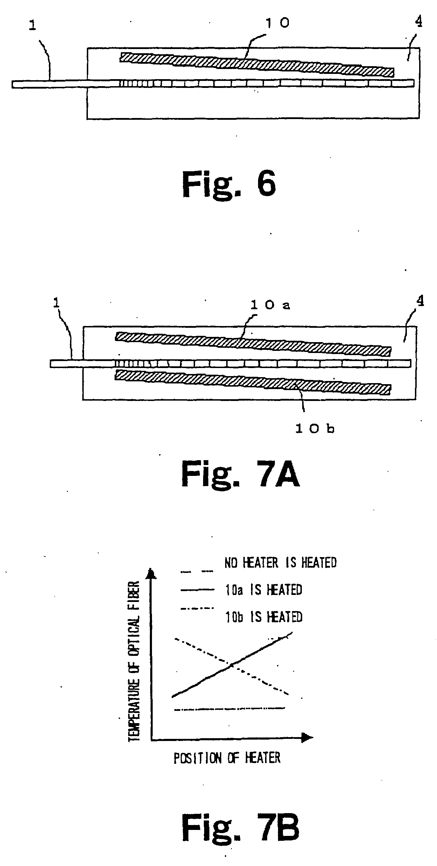

Fig. 6 illustrates a sixth embodiment of the present invention, and in Fig. 6, there are an optical fiber 1 with a grating, a substrate 4, and a sloped heater 10.

On the substrate 4, the single sloped heater 10 which is longer than the grating is formed at a predetermined sloped position from the mounting axis of the optical fiber 1, and the grating unit of the optical fiber 1 is mounted on the above-described axis so as to be within the range of the heater 10 . Because the distance between the heater 10 and the optical fiber 1 differs from location to location, the temperature transferred to the optical fiber 1 also differs from location to location. As a result, a temperature gradient can be given to the optical fiber by a single heater. In addition, when the configuration shown for the first to the third embodiments is used as the mounting method for the optical fiber 1, the mounting position of the optical fiber 1 can be stabilized.

It should be noted that the dispersion characteristic is controlled by giving a predetermined temperature gradient to the optical fiber by varying the heat generating quantity to be given to the heater 10.

In the configuration of the sixth embodiment, because the temperature gradient for the optical fiber can be given by a single heater, a heater control circuit can be simplified by optimization of the shape of the heater, thus reduction in manufacturing cost may be remarkably anticipated.

Fig. 7A illustrates a seventh embodiment of the present invention, and in Fig. 7A, there are an optical fiber 1 with a grating, a substrate 4, a first sloped heater 10a, and a second sloped heater 10b. In addition, Fig. 7B is a chart showing relationship between the temperature of the optical fiber and the position of the heaters when the sloped heaters 10a and 10b shown in Fig. 7A are respectively rendered to generate heat.

On the substrate 4, the sloped heaters 10a and 10b have the same shape as the grating, a longer size, and are formed at predetermined sloped positions from the mounting axis of the optical fiber 1 such that central axes of the heaters are parallel with each other and have the mounting axis of the optical fiber 1 in between. The sloped heaters 10a and 10b are positioned mutually opposed, and the grating unit of the optical fiber 1 is mounted on the above-described axis so as to be within the range of the sloped heaters 10a and 10b. Because the sloped heaters 10a and 10b are in a reverse relation in distance at respective locations from the optical fiber 1, the optical fiber 1 can have a positive or negative temperature gradient as shown in Fig. 7B. It should be noted that the heat transfer mode to the optical fiber 1 by the sloped heaters 10a and 10b, the controlling method for the dispersion characteristic, and the mounting method of the optical fiber 1 are the same as those for the sixth embodiment.

In the configuration of the seventh embodiment, because the reversible temperature gradient can be given to the optical fiber by switching the two heaters, the variable width can be compensated for both positive or negative direction for the initial dispersion quantity, and the variable dispersion quantity can be doubled for the configuration shown in the sixth embodiment.

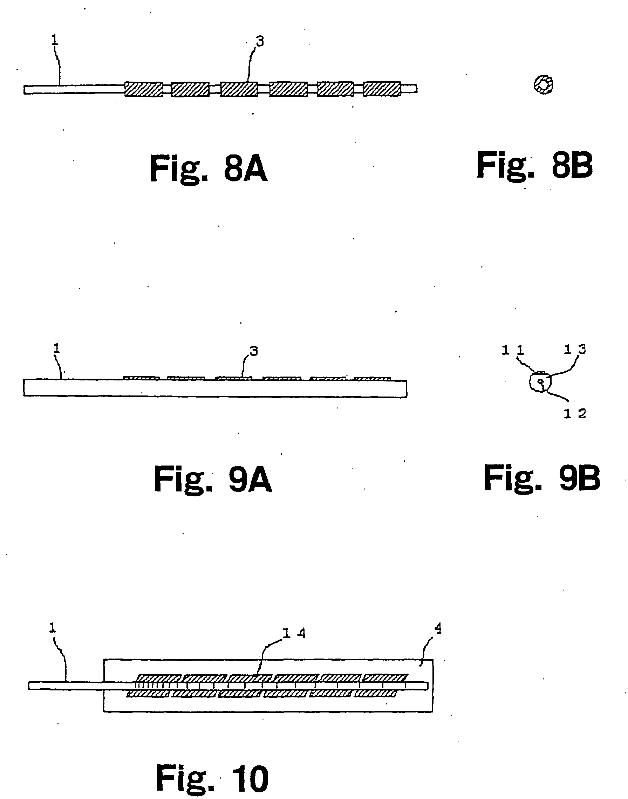

Fig. 8 illustrates an example configuration according to an eighth embodiment of the present invention. In Fig. 8 are shown an optical fiber 1 with a grating, and heaters 3.

On an external periphery of the optical fiber 1, heaters 3 arranged in a row are formed in a range longer than the grating. With this configuration, the distance between the optical fiber 1 and the heaters 3 is minimized, such that the heat is transferred to the optical fiber from the entire periphery and the internal temperature of the optical fiber 1 can be stabilized. It should be noted that the controlling method for the dispersion characteristic is the same as that in the first embodiment.

In the example of the eighth embodiment, the optical fiber and the heaters are in a closely contacted state, and the heat is transferred to the optical fiber from the entire periphery thereof, such that stable high heat conductive efficiency can be obtained, so that reduction in power consumption and improvement in responsive speed at the time of temperature control can be obtained.

Fig. 9 illustrates an example configuration according to a ninth embodiment of the present invention. In Fig. 9 are shown an optical fiber 1 with a grating, heaters 3, a plane 11, a core 12, and cladding 13.

The plane 11 is formed on the cladding 13 of the optical fiber 1, and the heaters 3 arranged in a row for a range longer than the grating are formed on the plane 11. With this configuration, the distance between the core 12 and the heaters 3 of the optical fiber 1 can be minimized. It should be noted that the controlling method for the dispersion characteristic is the same as that described above for the first embodiment.

According to the ninth embodiment, because a cladding layer of the optical fiber is made thinner, the heat resistance of the cladding layer is reduced and remarkable reduction in heater power consumption and remarkable improvement in responsive speed at the time of temperature control can both be obtained.

Fig. 10 illustrates an example configuration according to a tenth embodiment of the present invention, and in Fig. 10, there are an optical fiber 1 with a grating, a substrate 4, and tapered heaters 14.

On the substrate 4, the tapered heaters 14 are formed arranged in a row longer than the grating, and the optical fiber 1 is mounted on such a position that the grating unit is within the range of the heaters 14. Because the temperature near the tapered units of the heaters 14 is highest, heat generated by the tapered units can be transferred to lower temperature regions at gaps by arranging the tapered units at positions neighboring gaps between the heaters . In this way, lower temperatures at gaps between the heaters can be eliminated. In addition, by employing the configuration shown in the first to third embodiments as the mounting method for the optical fiber 1, the mounting position of the optical fiber 1 can be stabilized.

It should be noted that the dispersion characteristic is controlled by giving the temperature gradient to the optical fiber 1 by differentiating the amount of heat generated by respective heaters 14.

In the tenth embodiment of the present invention, because the temperature of the lower temperature regions in the gaps between the heaters can be raised, variations of the temperature gradient of the optical fiber can be reduced, the heat transfer condition is stabilized, and dispersion compensation accuracy is improved.

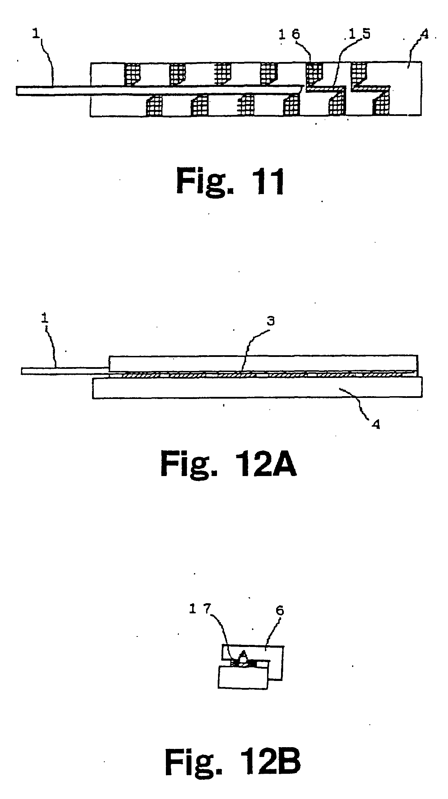

Fig. 11 illustrates an example configuration according to an eleventh embodiment of the present invention. In Fig. 11 are shown an optical fiber 1 with a grating, a substrate 4, heat generators 15, and tapered patterns 16.

On the substrate 4, the heaters composed of the heat generators 15 and the tapered patterns 16 are formed arranged in a row for a range longer than the grating, and the optical fiber 1 is mounted at a position such that the grating unit is within the range of the above-described heaters. By employing tapered patterns 16 in which cross-sectional areas thereof become smaller nearer the heat generators 15, superfluous heat generation outside the heat generators 15 can be reduced.

It should be noted that the dispersion characteristic is controlled by giving the temperature gradient to the optical fiber 1 by differentiating respective heat generating quantities of the heat generators 15.

In the eleventh embodiment of the present invention, since wasteful heat generation outside the heat generators can be reduced, power consumption is remarkably reduced.

Fig. 12 illustrates an example configuration according to a twelfth embodiment of the present invention, and in Fig. 12 are shown an optical fiber 1 with a grating, heaters 3, a substrate 4, a grooved cover 6, and metal-contained adhesive agents 17.

The twelfth embodiment differs from the second embodiment in that the metal-contained adhesive agents are filled in areas such as the gaps between the optical fiber 1 and the heaters 3. In other aspects, the configuration and operation are the same as described above for the second embodiment. Because the metal-contained adhesive agents 17 are added with metal particles and generally have higher heat conductivity than an adhesive agent not including any metal, the heat conductivity from the heaters 3 to the optical fiber 1 may be improved.

In addition, this embodiment may also be implemented with the configurations of any of the other embodiments of the present invention.

In the twelfth embodiment, because the heat conductivity between the heaters and the optical fiber is improved, power consumption may be further remarkably reduced.

Fig. 13 illustrates a thirteenth embodiment of the present invention, and in Fig. 13, there are an optical fiber 1 with a grating, heaters 3, a substrate 4, variable resistors 18, and an electrical circuit 19 for heat generation by the heaters.

A difference of the thirteenth embodiment from the eleventh embodiment is that, in the thirteenth embodiment, a current or voltage individually supplied to the heaters 3 arranged in a row can be varied by adjusting the variable resistors 18 connected in series with the heaters 3. With this configuration, variations in resistance values of individual heaters can be corrected, and a problem of common use of supply power source can be complied with.

This embodiment may also be implemented with the configurations shown in other embodiments.

With the thirteenth embodiment of the present invention, because original variations of the heaters are reduced, interchangeability of parts is enhanced while assembly is simplified. As a result, manufacturing costs of a heater control circuit may be remarkably reduced.

According to the present invention, since positional relationship between the optical fiber and the heaters is fixed, positional adjustment works involved in mounting of the optical fiber and heater parts can be simplified, and heat transfer condition between the heaters and the optical fiber is also stabilized, dispersion compensation accuracy and in assembly efficiency are obtained.

Further, because according to the present invention the optical fiber and the heaters can be closely arranged, stable high heat conductive efficiency can be obtained, such that power consumption can be reduced and response speed can be improved.

Furthermore, according to the present invention, because mounting conditions of the optical fiber can be confirmed against marking, it is unnecessary to make the heater wider than necessary, as required in the conventional art, and the size of the heaters can be reduced to the necessary minimum.

Moreover, according to the present invention, because the optical fiber can have the temperature gradient by single heater, the control circuit for the heater can be simplified by optimization of the shape of the heater.

Moreover, according to the present invention, because the optical fiber can be imparted with a reversible temperature gradient by switching two heaters, variable width can be compensated to both positive or negative direction for the initial dispersion quantity, and the variable dispersion quantity can be doubled for the configuration shown in the fourth embodiment.

Moreover, according to the present invention, because a single heater can impart the optical fiber with a temperature gradient, the control circuit for the heater can be simplified by optimization of the shape of the heater.

Moreover, according to the present invention, because by switching two heaters the optical fiber can be imparted with a reversible temperature gradient, variable width can be compensated in both positive or negative direction for the initial dispersion quantity. In this manner, the variable dispersion quantity can be doubled for the configuration shown in the sixth embodiment.

Moreover, according to the present invention, because the optical fiber and the heaters are in closely contact and the heat is transferred to the optical fiber from all peripheral directions, stable high heat conductive efficiency can be obtained, such that power consumption can be reduced, and the responsive speed at the time of the temperature control may be remarkably improved.

Moreover, according to the present invention, because the cladding layer of the optical fiber is made thinner, the heat resistance of the cladding layer is reduced compared with other inventions, such that remarkable reduction in power consumption and remarkable improvement in the responsive speed at the time of the temperature control can both be obtained.

Moreover, according to the present invention, because the temperature at the low temperature regions at gaps between the heaters can be raised, variations in the temperature gradient of the optical fiber can be reduced, and the heat conductive condition is stabilized.

Moreover, according to the present invention, because wasteful heat generation outside the heat generators can be reduced, power consumption can be further reduced.

Moreover, according to the present invention, because heat conductivity between the heaters and the optical fiber can be increased, power consumption may be remarkably reduced.

Moreover, according to the present invention, because variations of the component heaters can be reduced, manufacturing yield can be improved and manufacturing costs of the control circuit for the heaters may be reduced.

**Claims**

1. A light dispersion equalizer comprising:

   an optical fiber having a grating which causes reflection of light of a predetermined wavelength from signal light propagating through the optical fiber;
   a substrate having formed thereon a groove for mounting said optical fiber; and
   a plurality of heaters for regulating the temperature of said optical fiber;

   wherein said plurality of heaters are arranged on said substrate along said groove.

2. A light dispersion equalizer comprising:

   an optical fiber having a grating which causes reflection of light of a predetermined wavelength from signal light propagated through the optical fiber;
a holder having formed thereon a groove for holding said optical fiber;
a plurality of heaters for regulating the temperature of said optical fiber; and
a substrate having said plurality of heaters arranged along said groove thereon;

wherein said optical fiber is grasped by said holder and said substrate.

3. A light dispersion equalizer comprising:

an optical fiber having a grating which causes reflection of light of a predetermined wavelength from signal light propagated through the optical fiber;
a plurality of heaters for regulating the temperature of said optical fiber; and
a substrate having said plurality of heaters theron;

wherein said substrate has a mark indicating mounting position of said optical fiber, and said optical fiber is positioned by said mark and mounted on said heaters.

4. A light dispersion equalizer comprising:

an optical fiber having a grating which causes reflection of light of a predetermined wavelength from signal light propagated through the optical fiber;
a heater for regulating the temperature of said optical fiber; and
a substrate having said heater thereon;

wherein said heater changes cross-sectional areas thereof in an axial direction of said optical fiber.

5. A light dispersion equalizer according to claim 4, wherein an even number of said heaters are provided; and
the heaters are configured to mutually oppose each other at positions with the same interval from said optical fiber having said optical fiber in their between, and cross-sectional areas of two groups of the heaters, each of the groups comprising one half of the heaters, are in a mutually opposite relationship the axial direction of said optical fiber.

6. A light dispersion equalizer comprising:

an optical fiber having a grating which causes reflection of light of a predetermined wavelength from signal light propagated through the optical fiber;
a heater for regulating the temperature of said optical fiber; and
a substrate having said heater thereon;

wherein said heater is obliquely arranged on said substrate relative to the axis of said optical fiber.

7. A light dispersion equalizer according to claim 6;
wherein said heater is in even number, and
two groups of heaters each composed of one half of the heaters in the even number are arranged mutually in parallel having said optical fiber in between.

8. A light dispersion equalizer comprising:

an optical fiber having a grating which causes reflection of light of a predetermined wavelength from signal light propagated through the optical fiber; and
heaters for regulating the temperature of said optical fiber;

wherein said heaters are arranged on the external periphery of said optical fiber.

9. A light dispersion equalizer comprising:

an optical fiber having a grating which causes reflection of light of a predetermined wavelength from signal light propagated through the optical fiber; and
a plurality of heaters for regulating the temperature of said optical fiber;

wherein said heaters are arranged on a plane formed on external periphery of cladding of said optical fiber.

10. A light dispersion equalizer comprising:

an optical fiber having a grating which causes reflection of light of a predetermined wavelength from signal light propagated through the optical fiber;
a plurality of heaters for regulating the temperature of said optical fiber; and
a substrate having said heaters thereon;

wherein said heaters have tapered units formed at ends thereof.

11. A light dispersion equalizer comprising:

an optical fiber having a grating which causes reflection of light of a predetermined wavelength from signal light propagated through the optical fiber;
a plurality of heaters for regulating the temperature of said optical fiber; and
a substrate having said heater thereon;

wherein said heaters have heat generators and tapered patterns connected with said heat generators, and said optical fiber is arranged on said heat generators.

**12.** A light dispersion equalizer comprising:

an optical fiber having a grating which causes reflection of light of a predetermined wavelength from signal light propagated through the optical fiber;
heaters for regulating the temperature of said optical fiber; and
metal-contained resins filled in gaps between said optical fiber and said heaters.

**13.** A light dispersion equalizer comprising:

an optical fiber having a grating which causes reflection of light of a predetermined wavelength from signal light propagated through the optical fiber;
a plurality of heaters for regulating the temperature of said optical fiber; and
variable resistors respectively connected in series with said plurality of heaters.

## Fig. 1A

## Fig. 1B

## Fig. 1C

Fig. 2A

Fig. 2B

Fig. 3

Fig. 4

Fig. 5A

Fig. 5B

## Fig. 6

## Fig. 7A

## Fig. 7B

Fig. 8A

Fig. 8B

Fig. 9A

Fig. 9B

Fig. 10

Fig. 11

Fig. 12A

Fig. 12B

# Fig. 13

# Fig. 14

## Fig. 15A

## Fig. 15B

## Fig. 15C

Fig. 16A

Fig. 16B